# EUROPÄISCHE PATENTANMELDUNG

(11) **EP 1 564 689 A2**
(43) Veröffentlichungstag der Anmeldung: **17.08.2005**
(21) Anmeldenummer: 05000884.6
(22) Anmeldetag: 18.01.2005
(51) Int. Cl.: G07C 9/00

(54) **Vorrichtung zum Betätigen eines Schlosses mit einer Not-Einrichtung zum Entsichern und/oder Sichern des Schlosses**

(30) Priorität: 17.02.2004 DE 102004007582
(71) Anmelder: Huf Hülsbeck & Fürst GmbH & Co. KG, 42551 Velbert (DE)
(72) Erfinder: Steegmann, Bernd, 42579 Heiligenhaus (DE)
(74) Vertreter: Mentzel, Norbert, Dipl.-Phys.

(57) **Zusammenfassung**

Die Erfindung richtet sich auf eine Vorrichtung, die zum Betätigen eines Schlosses an einer Tür (11) oder einer Klappe eines Fahrzeugs dient. An der Türaußenseite befindet sich ein Griff (20), der über eine Wirkverbindung mit einem in der Fahrzeugtür (11) befindlichen Schloss steht. Im Normalfall kann das Schloss durch Fernbedienung zwischen seiner gesicherten und entsicherten Position umgesteuert werden, wofür ein ID-Geber (40) verwendet wird, der mit dem Fahrzeug kommuniziert. Wenn die elektrische Betätigung versagt, weil z.B. die Fahrzeugbatterie ausgefallen ist, so schlägt die Erfindung als Not-Einrichtung vor, den ID-Geber (40) als aktiven Teil dabei zu verwenden. Die Erfindung nutzt die elektrische Energie in der Stromquelle (44) des ID-Gebers (40), um einen auch im Normalfall zur Umsteuerung des Schlosses dienenden Aktuator zu betätigen. Dazu genügt es, einen entsprechenden elektrischen Speicher (26) im Fahrzeug vorzusehen, der von der Stromquelle (44) dann aufgeladen wird und bei Erreichen eines ausreichenden Füllstandes zur Umsteuerung des Aktuators im Notfall genutzt wird, (Fig. 6).

## Beschreibung

Die Erfindung richtet sich auf eine Vorrichtung der im Oberbegriff des Anspruches 1 angegebenen Art. An der Tür-Außenseite sitzt ein Griff, der in Wirkverbindung mit dem Schloss steht. Das Schloss kann zwischen einer gesicherten Position, wo die Griffbetätigung wirkungslos ist, in eine entsicherte Position überführt werden, wo eine Griffbetätigung erfolgreich ist und mittels des Griffs ein Öffnen der Tür erlaubt. Zwischen dem Fahrzeug und einem Identifikationsgeber, der nachfolgend kurz "ID-Geber" genannt wird, findet eine Kommunikation mittels Codesignalen statt. Diesen ID-Geber trägt der berechtigte Fahrzeugbenutzer bei sich. Zu dieser Kommunikation sind eine ruhende Batterie im Fahrzeug und eine tragbare Stromquelle im ID-Geber erforderlich. Im Normalfall, wenn die elektronische Einrichtung funktioniert, betreibt die Fahrzeugbatterie einen im Fahrzeug befindlichen Aktuator, welcher für die Umsteuerung zwischen der Entsicherung und/oder Sicherung des Schlosses dient.

Wenn aber die elektrische Einrichtung versagt, weil z.B. die Fahrzeugbatterie leer ist, muss eine Not-Einrichtung vorgesehen sein, die es auch im Notfall erlaubt, das Schloss zu entsichern und/oder zu sichern. Im Stand der Technik wurde dafür auf mechanischem Wege wirkende Einrichtungen verwendet. Der berechtigte Fahrzeugbenutzer verfügte über einen mechanischen Notschlüssel, der bei Nichtgebrauch aus praktischen Gründen im Bereich des ID-Gebers aufbewahrt wurde. Weiterhin musste für den Notschlüssel ein Schließzylinder an der Tür bzw. Klappe des Fahrzeugs vorgesehen sein, in den der Schlüssel im Notfall eingesteckt werden musste, um auf diese Weise die Zugangsberechtigung des Notschlüssel-Benutzers zu ermitteln. Schließlich war noch ein mechanisches Gestänge zwischen dem Schließzylinder und dem Schloss erforderlich, über welches im Erfolgsfall durch Drehen des Notschlüssels im Schließzylinder ein Steuerimpuls zum Entsichern und/oder Sichern des Schlosses geleitet werden konnte. Schließlich mussten am Schloss außer einem Eingang für den elektrisch betriebenen Aktuator auch noch mechanische Eingänge für das Gestänge des Schließzylinders vorgesehen sein. Diese bekannte Not-Einrichtung erforderte somit zahlreiche Bauteile, die für sich hergestellt und montiert werden mussten, was zeitaufwendig war. Außerdem erforderten die vorgenannten zahlreichen Bauteile Platz, der dann für andere wichtige Elemente der Vorrichtung nicht mehr zur Verfügung stand.

Der Erfindung liegt die Aufgabe zugrunde, eine zuverlässige Vorrichtung der im Oberbegriff von Anspruch 1 genannten Art zu entwickeln, die einfacher und platzsparender ausgebildet ist. Dies wird erfindungsgemäß durch die im Anspruch 1 angeführten Maßnahmen erreicht, denen folgende besondere Bedeutung zukommt.

Die Erfindung schlägt vor, im Notfall die elektrische Energie der Stromquelle im ID-Geber zur elektrischen Betätigung des Aktuators zu verwenden. Dann kann im Notfall, wie im Normalfall, auf elektrischem Weg das Schloss zwischen seiner Sicherungs- und Entsicherungsstellung umgesteuert werden. Damit wird der übliche tragbare ID-Geber ein aktiver Teil der erfindungsgemäßen Not-Einrichtung. Bei der Erfindung entfallen alle mechanischen Einrichtungen und alle mechanischen Identifikationsmittel, die bei der bekannten Not-Einrichtung erforderlich waren. Der im Stand der Technik dafür erforderliche Platz wird bei der Erfindung eingespart. Bis auf wenige raumsparende elektrische Bauteile, wie den Energiespeicher im Fahrzeug, sind bei der Erfindung keine zusätzlichen mechanischen Not-Betätigungsmittel erforderlich. Die erfindungsgemäße Noteinrichtung kann z.B. in folgender Weise ausgebildet sein.

Bei der Erfindung genügt es, den ID-Geber in eine bestimmte Sonderposition gegenüber dem Fahrzeug zu bringen und/oder am ID-Geber oder Fahrzeug eine Sonderbetätigung auszulösen, damit elektrische Energie aus der Stromquelle des ID-Gebers in einen im Fahrzeug angeordneten Energiespeicher fließt. Wenn der Energiespeicher einen ausreichenden elektrischen Füllstand erlangt hat, kann er entladen werden und dabei den Aktuator in üblicher Weise betätigen.

Als passiver Teil der Not-Einrichtung können bei der Erfindung, außer dem Energiespeicher, die bisherigen elektrischen Einrichtungen verwendet werden, die schon im Normalfall zum Betrieb des Aktuators und zur Weiterleitung des Steuerimpulses bis zum Schloss erforderlich sind.

Weitere Maßnahmen und Vorteile der Erfindung ergeben sich aus den Unteransprüchen, der nachfolgenden Beschreibung und den Zeichnungen. In den Zeichnungen ist die Erfindung schematisch in einem Ausführungsbeispiel dargestellt. Es zeigen:
- Fig. 1: schematisch den Verriegelungszustand der geschlossenen Tür eines Fahrzeugs in der ersten Phase einer Normalbetätigung, wo ein berechtigter Fahrzeugbenutzer sich dem Fahrzeug nähert, der den ID-Geber bei sich trägt,
- Fig. 2: die nächste Betriebsphase, wo das Fahrzeug Codesignale an den ID-Geber gibt, um die Zugangsberechtigung des Fahrzeugbenutzers zu ermitteln,
- Fig. 3: die nachfolgende Betriebsphase, wo der ID-Geber antwortet und die Antwort im Fahrzeug zur Ermittlung der Zugangsberechtigung ausgewertet wird,
- Fig. 4: die letzte Phase der Normalbetätigung beim Öffnen der Tür, wo nach Feststellung der Zugangsberechtigung das Schloss auf elektrischem Weg entsichert wird und daher eine Betätigung des Griffes erfolgreich ist, um das Schloss zu entriegeln und die Tür zu öffnen,
- Fig. 5: das Schaltbild eines bei der erfindungsgemäßen Vorrichtung verwendbaren ID-Gebers mit den wichtigsten Bauteilen, und
- Fig. 6: die Fahrzeugtür bei Betätigung im Notfall mit den dafür vorgesehenen elektrischen Steuermitteln, die es erlauben, den ID-Geber als aktiven Teil der erfindungsgemäßen Not-Einrichtung zu verwenden.

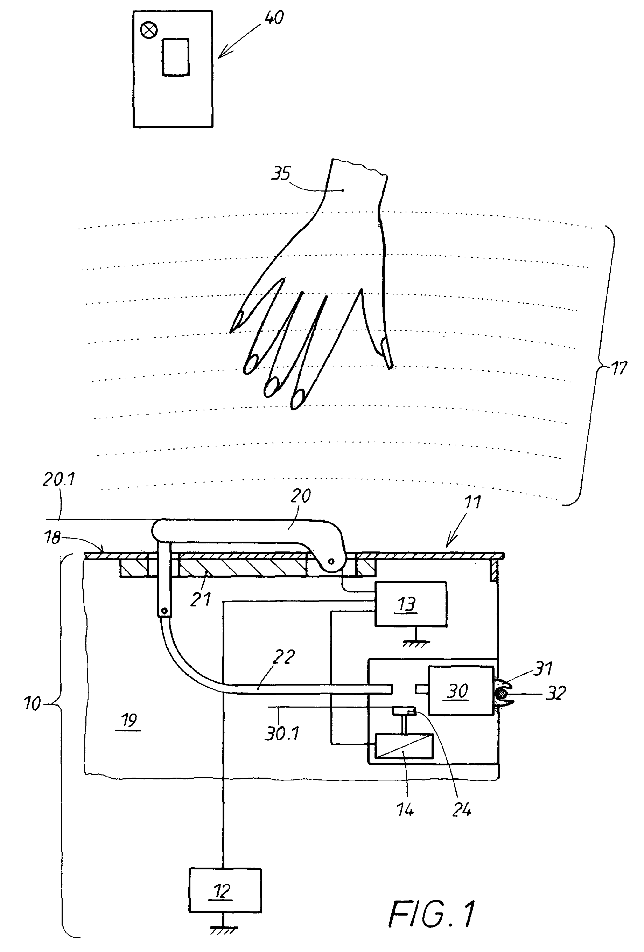

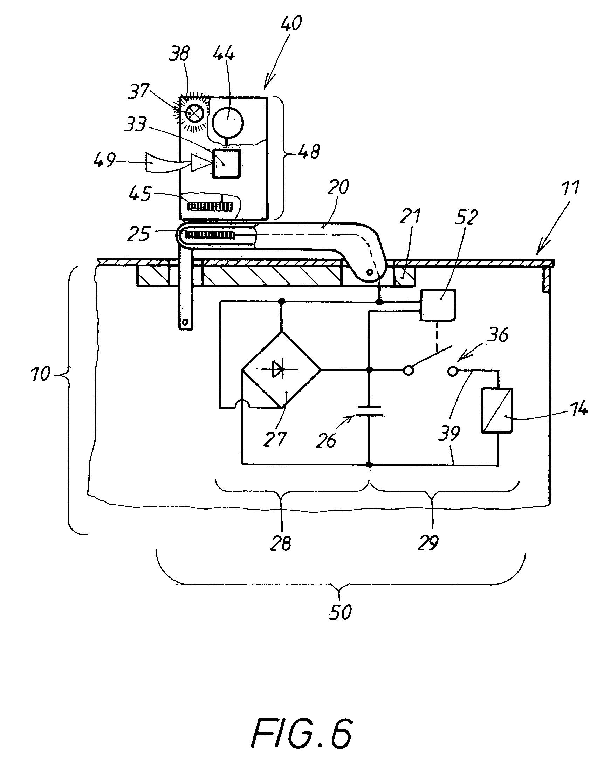

Im Schema von Fig. 1 sind vom Fahrzeug 10 lediglich eine Tür 11 und eine Fahrzeugbatterie 12 gezeigt, welche ein elektrisches Steuergerät 13 und über dieses Steuergerät 13 einen Aktuator 14 mit elektrischer Energie versorgt. An der Außenseite 18 der Tür 11 ist ein Griff 20 angeordnet, der an einem Träger 21 schwenkbar oder klappbeweglich angelenkt ist. Der Träger 21 dient zur nicht näher gezeigten Befestigung der ganzen, abschließend in Fig. 6 beschriebenen Griff-Baugruppe 50 im Türinneren 19. Im Türinneren 19 befindet sich auch ein Schloss 30, welches mit einer aus der Tür herausragenden Drehfalle 31 herausragt. Im verriegelten Zustand der Tür 11 gemäß Fig. 1 hält die Drehfalle einen Schließbolzen 32 fest, der an einem nicht näher gezeigten Türpfosten sitzt.

Das Schloss 30 kann sich in einer "gesicherten Position" befinden, wo die Griffbetätigung wirkungslos ist. Das ist in Fig. 1 anhand eines Kupplungsglieds 24 veranschaulicht, das dort die durch die Hilfslinie 30.1 verdeutlichte Position einnimmt. Zwischen dem Griff und dem Schloss 30 befindet sich eine in der Regel mechanische Wirkverbindung 22, die dann unterbrochen bzw. entkuppelt ist, wenn das Kupplungsglied 24 sich in der vorgenannten gesicherten Position 30.1 befindet. Solange die gesicherte Position 30.1 vorliegt, wird eine Betätigung des Griffs 20 durch Unbefugte nicht auf das Schloss 30 übertragen. In Fig. 1 befindet sich der Griff 20 in einer durch eine Hilfslinie 20.1 veranschaulichten "Ruhelage", die durch am Griff 20 vorgesehene, nicht näher gezeigte Federmittel und Endanschläge bestimmt ist.

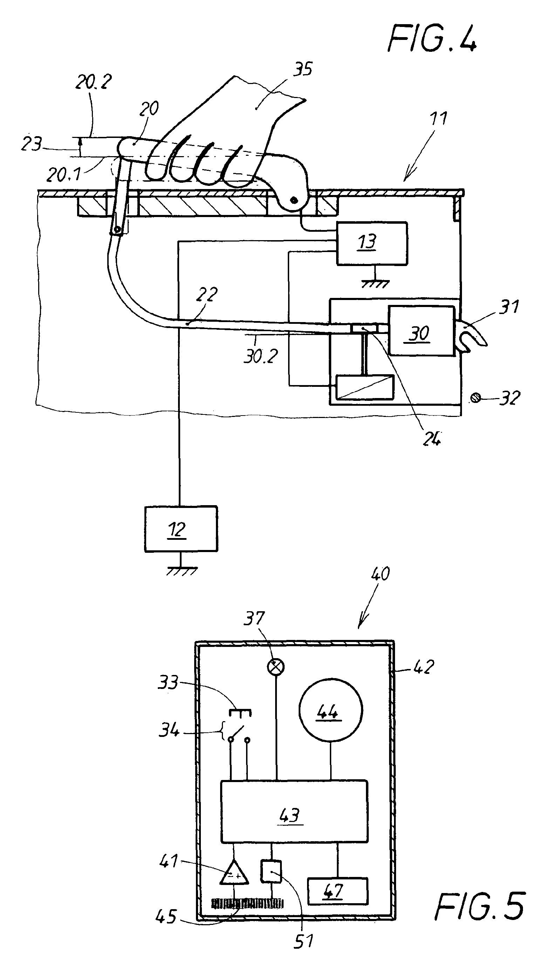

Das Schloss 30 kann aber, wie anhand der Fig. 4 veranschaulicht ist, sich in einer "gesicherten Position" befinden, wo die Wirkverbindung 22 zwischen Griff 20 und Schloss 30 geschlossen ist. Dies ist in Fig. 4 durch eine entsprechende Hilfslinie 30.2 am Kupplungsglied 24 veranschaulicht. In diesem Fall wird der Griff 20 von einer menschlichen Hand 35 erfasst und im Sinne des Schwenkpfeils 23 von Fig. 5 betätigt, dann wird das Schloss 30 entriegelt. Der Griff befindet sich dann in seiner durch eine Hilfslinie 20.2 in Fig. 5 veranschaulichten Arbeitslage 20.2. Bei der Entriegelung gibt die Drehfalle 31 den Schließbolzen 32 frei. Die Tür 11 kann mittels des Griffs 20 geöffnet werden.

Liegt die gesicherte Position 30.1 von Fig. 1 vor, so sorgt ein sogenanntes "Keyless Entry System" dafür, das nur berechtigte Personen Zugang erlangen. Dies geschieht durch fernwirksame Kommunikation zwischen dem Fahrzeug 10 und einem im Besitz der berechtigten Person befindlichen ID-Gebers 40, dessen wesentlicher Aufbau anhand der Fig. 5 später näher erläutert wird. Der ID-Geber ist für dieses Fahrzeug 10 passend individualisiert. Wie diese Kommunikation im Normalfall erfolgen kann, wird anhand der Fig. 1 bis 3 in drei Betriebsschritten erläutert.

In Fig. 1 wird angenommen, dass das Fahrzeug steht und, wie bereits erwähnt wurde, die Tür 11 verriegelt und das Schloss 30 gesichert ist. Im Normalfall wird, unter Nutzung der Fahrzeugbatterie 12 ein elektrisches Feld 17 um den Griff 20 herum aufgebaut. Realisiert wird das durch nicht näher gezeigte kapazitive Sensoren, die ansprechen, wenn sich eine Hand dem Griff 20 nähert. Das ist in Fig. 1 durch eine ins elektrische Feld 17 gelangende menschliche Hand 35 veranschaulicht. Der ID-Geber 40 spielt im Betriebszustand von Fig. 1 zunächst noch keine Rolle.

Anstelle eines elektrischen Feldes 17 könnten andere, den Außenbereich des Fahrzeugs 10 beobachtende Überwachungssysteme benutzt werden. Es eignen sich z.B. Lichtschranken. Solche Lichtschranken können auch auf den Bereich des Griffes 20 beschränkt sein.

Wenn durch Veränderung des um den Griff 20 aufgebauten elektrischen Feldes 17 die erwähnten kapazitiven Sensoren feststellen, dass sich eine Hand 35 nähert, dann wird im Fahrzeug 10 ein elektrischer Bauteil 25 geweckt, das eine Abfrage 15 startet.

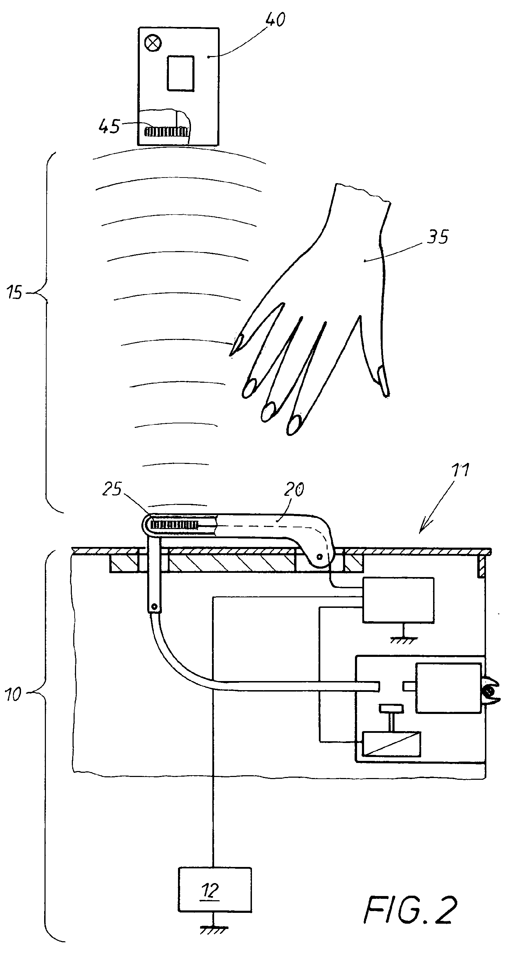

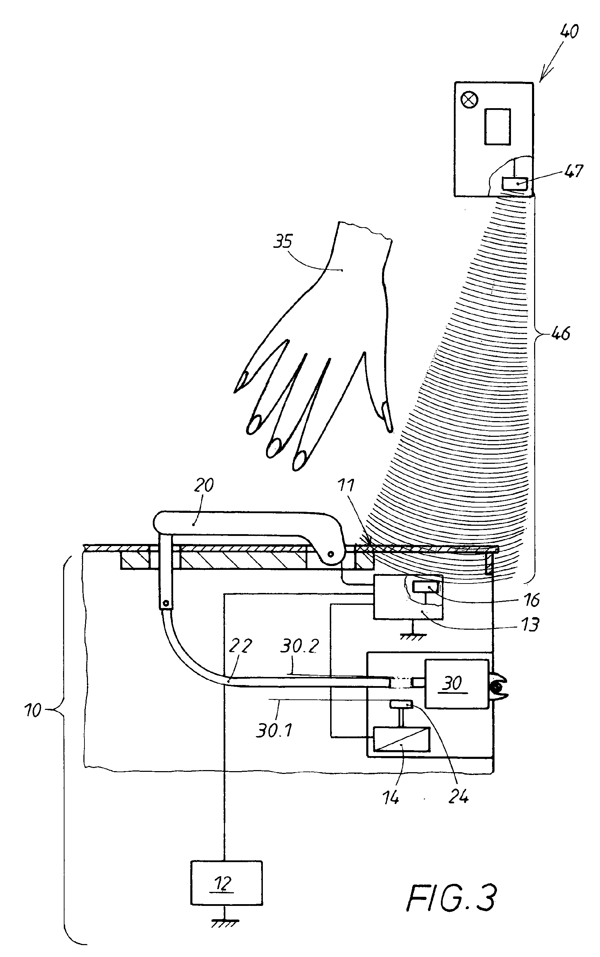

Dieses Bauteil ist im vorliegenden Fall eine im Griff 20 integrierte induktive Antenne 25, die ein elektromagnetisches Codetelegramm im KHz-Bereich sendet, das von einer im ID-Geber vorgesehenen induktiven Antenne 45 empfangen wird. Das ist in Fig. 2 dargestellt. Diese Abfrage 15 wird, wie Fig. 5 verdeutlicht, von der Antenne 45 über einen Empfangsverstärker 41 an einen Mikrocontroller 43 weitergeleitet. Der Mikrocontroller 43 ist an eine Stromquelle 44 angeschlossen, die z.B. aus einer sogenannten Knopfzelle im Gehäuse 42 des ID-Gebers 40 besteht. Von der Stromquelle 44 gespeist ist auch ein im Gehäuse 42 des ID-Gebers 40 angeordneter Sender 47, der gemäß Fig. 3 veranlasst wird, eine hochfrequente codierte Antwort 46 abzugeben, die im MHz-Bereich liegt und einen Code beinhaltet.

Wie Fig. 3 zeigt, ist im Fahrzeug 10 ein dieses Funksignal 46 aufnehmender Empfänger 16 angeordnet, der Bestandteil des bereits erwähnten dortigen Steuergeräts 13 ist. Das Steuergerät 13 wertet die Antwort 46 aus und sendet im Erfolgsfall einen Steuerimpuls an den Aktuator 14. Der Aktuator 14 steuert daraufhin das Kupplungsglied 24 in seine bereits beschriebene wirksame zweite Position 30.2. Diese Situation ist in Fig. 4 zu erkennen. Dann ist, wie bereits erwähnt wurde, das Schloss 30 in seiner entsicherten Position 30.2, worauf der Griff 20 erfolgreich schwenkbetätigt 23 werden kann.

Der Aktuator 14 besteht aus einem elektrischen Motor, der die Umsteuerung des Schlosses 30 zwischen der gesicherten Position 30.1 von Fig. 1 und der entsicherten Position 30.2 gemäß Fig. 4 bewirkt. Besonders vorteilhaft ist es dabei, einen auf dem piezoelektrischen Prinzip wirkenden Motor zu verwenden, der üblicherweise als "Piezomotor" bezeichnet wird. Es handelt sich dabei um ein piezoelektrisches Bauelement, das elektrische Energie in mechanische Vibrationen umwandelt. Das piezoelektrische Bauelement ist in monolithischer Vielschichtbauweise aus Keramikplatten mit dazwischen liegenden Elektrodenschichten aus Kupfer aufgebaut, wobei die Schichtdicke der Elektroden nur wenige Mikrometer beträgt. Das piezoelektrische Bauelement ist mit einem Resonanzkörper verspannt, der von einer Federkraft gegen das anzutreibende Element des Motors gedrückt wird. Dieses anzutreibende Element kann aus einem Rad, einem Stab oder einem Bogenelement bestehen. Wenn das piezoelektrische Bauelement schwingt, vollführt das freie Ende des Resonanzkörpers elliptische Bewegungen aus, die das anzutreibende Element bewegen. In Abhängigkeit von der Frequenz der Schwingungen wird die Bewegungsrichtung des anzutreibenden Elements bestimmt.

Die Zugangsberechtigung im Normalfall gemäß Fig. 1 bis 4 setzt voraus, dass die Fahrzeugbatterie 12 ausreichend Energie liefert, um die für den vorbeschriebenen Dialog 15, 46 maßgeblichen elektronischen Bauteile 13, 16, 25 betreiben zu können. Ist aber die Fahrzeugbatterie 12 leer und/oder versagt eines der für die Kommunikation 15, 46 erforderlichen Bauteile, so ist man bei einer gesicherten Position 30.1 des Schlosses 30 auf eine Not-Einrichtung angewiesen, die bei der Erfindung in besonderer Weise ausgebildet ist und anhand der Fig. 6 beschrieben wird.

Bei der Erfindung übernimmt die Stromquelle 44 des ID-Gebers 40 die neue Funktion, im Notfall den Aktuator 14 zu betreiben. Dazu muss zunächst der ID-Geber 40 in eine aus Fig. 6 ersichtliche Sonderposition 48 bezüglich des Fahrzeugs 10 bzw. seines Griffs 20 gebracht werden. Im dargestellten Ausführungsbeispiel erfolgt am ID-Geber 40 eine Sonderbetätigung 49, wie durch einen Betätigungspfeil 49 in Fig. 6 veranschaulicht ist. Dazu besitzt, wie auch Fig. 5 erkennen lässt, das Gehäuse 42 des ID-Gebers 40 eine Sonderhandhabe, die im vorliegenden Fall aus einem Taster 33 besteht, der bei Betätigung einen elektrischen Schalter 34 schließt. Statt einer Sonderhandhabe 33 könnten auch anderen Zwecken dienende Handhaben vom ID-Geber 40 dafür verwendet werden. Die Sonderbetätigung im Fall anderer Handhaben ergibt sich durch eine Betätigung in einem bestimmten Modus, den der Mikrocontroller 43 im ID-Geber 40 als Sonderbetätigung erkennt.

In der Sonderposition 48 von Fig. 6 liegt eine induktive Kopplung der Antenne 45 vom ID-Geber 40 mit der Antenne 25 im Türgriff 20 vor. Nach Auslösen der Sonderbetätigung 49 wird eine elektrische Verbindung zwischen der Stromquelle 44 und der induktiven Antenne 45 geschlossen. Dies erfolgt, wie Fig. 5 erkennen lässt, über eine Sendeendstufe 51, die vom Mikrocontroller 43 eingeschaltet wird. Zwischen der geberseitigen Antenne 45 und der fahrzeugseitigen Antenne 25 wird auf induktivem Wege elektrische Energie übertragen und der Kondensator 26 im Fahrzeug aufgeladen. Die von der fahrzeugseitigen Antenne 25 kommenden Leitungen werden über einen Gleichrichter 27 zum Kondensator 26 geführt, der als Speicher für elektrische Energie dient und daher nachfolgend kurz als "Energiespeicher" bezeichnet werden soll. Bei der Erfindung hat die fahrzeugseitige Antenne 25, abgesehen von ihrer im Zusammenhang mit Fig. 2 bereits gezeigten und vorausgehend beschriebenen Wirkung, im Notfall die neue Funktion als "Energieempfänger" zu fungieren. Deshalb ist die Antenne 25 im Ladestromkreis 28 des Energiespeichers 26 geschaltet. Natürlich erhält auch die Antenne 45 im ID-Geber 40 eine neue, über die Wirkung in Fig. 2 hinausgehende Funktion, nämlich als Energiespender für die von seiner Stromquelle 44 stammende elektrische Energie zu dienen. Die Energieübertragung zwischen den beiden Antennen 45, 25 erfolgt mit einem überlagerten Code. Hat der Energiespeicher 26 einen ausreichenden elektrischen Füllstand erlangt, so wird die Energieeinspeisung beendet.

Wie Fig. 6 zeigt, ist ein im Entladestromkreis 29 auf der anderen Seite des Energiespeichers 26 befindlicher elektrischer Schalter 36 normalerweise offen. Im Bereich des Griffs 20, vorzugsweise in den Griff 20 integriert, ist ein Transponder 52 oder ein Security Controller angeordnet, der als Authentifizierungsglied fungiert und mit dem in der Sonderposition 48 befindlichen ID-Geber 40 kommuniziert. Diese Kommunikation erfolgt am einfachsten durch eine Feldbedämpfung (Challenged Response). Ist die Authentisierung des ID-Gebers 40 mit dem Transponder 52 erfolgreich, dann wird der Schalter 36 im Entladestromkreis 29 geschlossen. Im Entladestromkreis 29 ist aber auch der bistabile Aktuator 14 geschaltet, dessen Funktion beim Normalfall bereits vorausgehend beschrieben worden ist. Im Notfall empfängt dieser Aktuator 14 seine Energie aber nicht von der defekten Fahrzeugbatterie 12, sondern von dem über den ID-Geber geladenen Energiespeicher 26. Seine Wirkungsweise ist aber die Gleiche, wie im Normalfall; der Aktuator 14 bewegt das Kupplungsglied 24 so, wie in Fig. 3 und 4 bereits für den Normalfall erläutert wurde. Das Schloss wird von der gesicherten Position 30.1 gemäß Fig. 3 auch im Notfall über die Notversorgung des Energiespeichers 26 in seine aus Fig. 4 ersichtliche, bereits beschriebene entsicherte Position 30.2 überführt. Das Schloss 30 kann durch Betätigung 23 der Handhabe 20 entriegelt und die Tür 11 geöffnet werden.

Man kann die vorbeschriebene Sonderbetätigung 49 vermeiden, wenn man im Fahrzeug 10 einen Signalgeber und im ID-Geber 40 einen auf dieses Signal dann ansprechenden Sensor anordnet, wenn sich der ID-Geber 40 in der beschriebenen Sonderposition 48 befindet. Dann spricht der Sensor auf dieses Signal an und schaltet dann den von der Stromquelle 44 kommenden elektrischen Strom ein, der, gemäß Fig. 5, dann über die Sendestufe 51 zur induktiven Antenne 45 fließt und die geschilderte Energieübertragung in den fahrzeugseitigen Energiespeicher 26 bewirkt. Es empfiehlt sich den vorgenannten Signalgeber als Permanentmagneten auszubilden und einen Reed-Kontakt als Sensor zu benutzen. In der Sonderposition 48 des ID-Gebers 40 kommt der dort befindliche Reed-Kontakt in den Wirkbereich des fahrzeugseitigen Permanentmagneten und schaltet die elektrische Verbindung zur Stromquelle 44 im ID-Geber 40 ein. Den Permanentmagneten sollte man im Bereich des Griffes vorsehen, wenn, wie im Ausführungsbeispiel, auch die fahrzeugseitige Antenne 25 dort angeordnet ist.

Am Gehäuse können eine oder mehrere Anzeigen vorgesehen sein, die verschiedene Betriebszustände anzeigen. Eine Anzeige kann den aktuellen elektrischen Betriebszustand seiner Stromquelle 44 angeben. Dadurch wird der Besitzer daran erinnert, die Stromquelle 44 im ID-Geber 40 rechtzeitig auszuwechseln oder aufzuladen. Im vorliegenden Fall wird als Anzeige 37 gemäß Fig. 5 eine LED benutzt, die dann aufleuchtet, wenn im Notfall die Energieübertragung gemäß Fig. 6 erfolgreich beendet worden ist. Das in Fig. 6 angedeutete Aufleuchten 38 der LED 37 teilt dem berechtigten Benutzer mit, dass er den ID-Geber 40 aus der geschilderten Sonderposition 48 wieder wegnehmen kann. Das Aufleuchten 38 der Anzeige 37 oder über eine weitere Anzeige kann dem Benutzer auch signalisieren, dass auch schon das Schloss 30 gemäß Fig. 4 entsichert ist und daher eine Betätigung 23 der Handhabe 20 erfolgreich sein wird.

Der ID-Geber 40 kann aber auch Handhaben aufweisen, die im Notfall auch eine Umsteuerung des Schlosses 30 im umgekehrten Sinn herbeiführen; nämlich das Schloss aus seiner vorausgehend erreichten entsicherten Position 30.2 von Fig. 4 in seine gesicherte Position 30.1 von Fig. 3 zu überführen. Das kann z.B. dann für den berechtigten Fahrzeugbenutzer interessant sein, wenn er das mit einer defekten Fahrzeugbatterie 12 versehene Fahrzeug 10 wieder verlassen will, um Hilfe zu holen, in der Zwischenzeit aber Unbefugten den Zugang zum Fahrzeug 10 versperren will. Dafür könnte auch die verfügbare Sonderhandhabe 33 dienen, wenn man ihnen und den zugehörigen Elementen eine sogenannte "Toggle-Funktion" gibt. In diesem Fall wird bei einer erneuten Sonderbetätigung 49, die wieder den Ladevorgang des Energiespeichers 26 im Fahrzeug 10 bewirkt, nach erfolgreicher Authentisierung zwischen dem Transponder 37 und dem ID-Geber 40 der bistabile Aktuator 14 in die geschilderte andere Position 30.1 von Fig. 3 zurückbewegt.

Es empfiehlt sich zumindest all jene Glieder, die zur erfindungsgemäßen Notbetätigung gemäß Fig. 6 dienen, in einer vormontierten Griff-Baugruppe 50 zusammenzufassen, in welche auch die üblichen zum Griff 20 gehörenden weiteren Elemente, wie der Träger 21, integriert ist. Der Aktuator 14 der, wie erwähnt wurde, auch für den Normalfall benötigt werden kann, ist zweckmäßigerweise im Bereich des Schlosses 30, außerhalb dieser Griff-Baugruppe 50 angeordnet. In diesem Fall genügt es für elektrische Anschlüsse in der Leitung 39 im vorbeschriebenen Entladestromkreis 29 zu sorgen, die beim Einbau der Griff-Baueinheit 50 schnell und zuverlässig an den am Schloss befindlichen Aktuator 14 angeschlossen werden können.

Statt der geschilderten magnetischen Energieübertragung zwischen den induktiven Antennen 25, 45 von Fig. 6 könnte man auch eine galvanische Energieübertragung benutzen. Dazu könnten am vorbeschriebenen Gehäuse 42 des ID-Gebers 40 elektrische Kontakte vorgesehen sein, die mit seiner Stromquelle 44 mindestens dann in Verbindung stehen, wenn eine Sonderbetätigung 49 vorgenommen wird. Diesen Kontakten können, was ebenfalls nicht näher gezeigt ist, elektrische Gegenkontakte am Fahrzeug zugeordnet sein, die Bestandteil des vorbeschriebenen Ladestromkreises 28 sind. Die Anordnung solcher Gegenkontakte könnte auch im Bereich des Handgriffs 20 erfolgen.

### Bezugszeichenliste :

- 10: Fahrzeug
- 11: Tür an 10
- 12: Fahrzeugbatterie in 10
- 13: elektrisches Steuergerät in 10
- 14: Aktuator in 10, elektrischer Motor, Piezomotor
- 15: elektromagnetische Abfrage von 25 an 40 (Fig. 2)
- 16: Empfänger von 13 (Fig. 3)
- 17: elektrisches Feld außerhalb von 10 (Fig. 1)
- 18: Türaußenseite von 11 (Fig. 1)
- 19: Türinneres von 11 (Fig. 1)
- 20: Griff
- 20.1: Ruhelage von 20 (Fig. 1)
- 20.2: Arbeitslage von 20 (Fig. 4)
- 21: Träger für 20 (Fig. 1)
- 22: mechanische Wirkverbindung zwischen 20 und 30 (Fig. 1)
- 23: Pfeil der Schwenkbetätigung von 20
- 24: Kupplungsgliedfür 22 (Fig. 1)
- 25: elektrischer Bauteil, induktive Antenne in 20 für 15 (Fig. 2)
- 26: Kondensator in 28, Energiespeicher (Fig. 6)
- 27: Gleichrichter (Fig. 6)
- 28: Ladestromkreis für 26 (Fig. 6)
- 29: Entladestromkreis von 26 (Fig. 6)
- 30: Schloss in 11
- 30.1: gesicherte Position von 30 (Fig. 1)
- 30.2: entsicherte Position von 30 (Fig. 4)
- 31: Drehfalle von 30 (Fig. 1, 4)
- 32: Schließbolzen für 30 (Fig. 1, 4)
- 33: Sonderhandhabe, Taster an 40 (Fig. 5, 6)
- 34: elektrischer Schalter für 33 (Fig. 5)
- 35: menschliche Hand
- 36: elektrischer Schalter in 29 (Fig. 6)
- 37: Anzeige an 40, LED (Fig. 5, 6)
- 38: Aufleuchten von 37 (Fig. 6)
- 39: elektrische Anschlüsse für 14 in 29 (Fig. 6)
- 40: ID-Geber (Fig. 1)
- 41: Empfangsverstärker in 40 (Fig. 5)
- 42: Gehäuse von 40 (Fig. 5)
- 43: Mikrocontroller von 40 (Fig. 5)
- 44: Stromquelle von 40 (Fig. 5)
- 45: elektrischer Bauteil, induktive Antenne in 40 (Fig. 2, 5, 6)
- 46: codierte Antwort von 45, Funksignal (Fig. 3)
- 47: Sender für 46 in 40 (Fig. 3, 5)
- 48: Sonderposition von 40 (Fig. 6)
- 49: Pfeil der Sonderbetätigung von 33 (Fig. 6)
- 50: Griff-Baugruppe (Fig. 6)
- 51: Sendeendstufe (Fig. 5)
- 52: Transponder, Security Controller

## Patentansprüche

1. Vorrichtung zum Betätigen eines Schlosses (30), das sich an einer Tür (11) oder einer Klappe eines Fahrzeugs (10) befindet,
mit einem an der Tür-Außenseite (18) angeordneten Griff (20),
mit einer Wirkverbindung (22), welche eine Betätigung (23) des Griffs (20) auf das Schloss (30) überträgt,
mit einer fernwirksamen Kommunikation (15, 46) zwischen dem Fahrzeug (10) und einem ID-Geber (40), der im Besitz des berechtigten Fahrzeugbenutzers ist,
um das Schloss (30) zwischen einer gesicherten Position (30.1), wo die Griffbetätigung (23) wirkungslos ist, in eine entsicherte Position (30.2) zu überführen, wo die Griffbetätigung (23) erfolgreich ist,
wobei die Kommunikation (15, 46) auf Codesignalen (15) beruht, die zwischen mindestens zwei elektronischen Bauteilen (25, 45) ausgetauscht werden, von denen das eine Bauteil (25) im Fahrzeug (10) ruht, während das andere Bauteil (45) im ID-Geber (40) integriert ist,
mit einer ruhenden Batterie (12) im Fahrzeug (Fahrzeugbatterie 12) und einer tragbaren Stromquelle (44) im ID-Geber (40) für die Kommunikation (46),
wobei die Fahrzeugbatterie (12) einen Aktuator (14) im Fahrzeug (10) zur Entsicherung (30.2) und/oder Sicherung (30.1) des Schlosses (30) betreibt,
und mit einer Not-Einrichtung, die es auch im Notfall erlaubt, das Schloss (30) zu entsichern (30.2) und/oder zu sichern (30.1),
**dadurch gekennzeichnet ,**
**dass** der tragbare ID-Geber (40) ein aktiver Teil der Not-Einrichtung ist, dessen Stromquelle (44) im Notfall die Energie liefert, die zur Umsteuerung des Aktuators (14) erforderlich ist.

2. Vorrichtung nach Anspruch 1, **dadurch gekennzeichnet, dass** der ID-Geber (40) im Notfall in eine Sonderposition (48) gegenüber dem Fahrzeug (10) gebracht wird,
dass ein passiver Teil der Not-Einrichtung aus einem Speicher (26) für elektrische Energie (Energiespeicher 26) besteht, der an den Aktuator (14) elektrisch angeschlossen ist,
dass in der Sonderposition (48) des ID-Gebers (40) die elektrische Energie seiner Stromquelle (44) in den Energiespeicher (26) im Fahrzeug (10) solange fließt, bis der Energiespeicher (26) einen ausreichenden elektrischen Füllstand erlangt hat,
und dass der Energiespeicher (26) dann entladen wird und den Aktuator (14) zwischen der Sicherungs- und Entsicherungsstellung (30.1; 30.2) des Schlosses (10) umsteuert.

3. Vorrichtung nach Anspruch 1 oder 2, **dadurch gekennzeichnet, dass** der ID-Geber (40) im Notfall nicht nur in eine Sonderposition (48) gebracht wird, sondern auch eine Sonderbetätigung (49) erfährt
und dass die elektrische Energie aus der Stromquelle (44) des ID-Gebers nur dann in den Energiespeicher (26) im Fahrzeug (10) fließt, wenn die Sonderbetätigung (49) ausgeführt wird.

4. Vorrichtung nach Anspruch 3, **dadurch gekennzeichnet, dass** der ID-Geber (40) zu seiner Sonderbetätigung (49) eine eigene Handhabe (33) aufweist.

5. Vorrichtung nach Anspruch 4, **dadurch gekennzeichnet, dass** die Handhabe aus einem elektrischen Taster (33, 34) besteht.

6. Vorrichtung nach einem der Ansprüche 3 bis 5, **dadurch gekennzeichnet, dass** der ID-Geber (40) mindestens eine Handhabe (33) für bestimmte andere Funktionen am Fahrzeug (10) besitzt,
und dass diese Handhabe (33) bzw. Handhaben zur Sonderbetätigung (49) des ID-Gebers (40) in einem bestimmten Modus betätigt werden.

7. Vorrichtung nach Anspruch 2 oder 3, **dadurch gekennzeichnet, dass** anstelle einer Sonderbetätigung (49) ein Sensor im ID-Geber (40) angeordnet ist, der mit einem Signalgeber im Fahrzeug zusammenwirkt
und dass im Notfall in der Sonderposition (48) des ID-Gebers (40) der Sensor anspricht und den Fluss der elektrischen Energie aus der Stromquelle (44) im ID-Geber (40) in den Energiespeicher (26) im Fahrzeug (10) einschaltet.

8. Vorrichtung nach einem oder mehreren der Ansprüche 1 bis 7, **dadurch gekennzeichnet, dass** der Signalgeber aus einem Permanentmagneten und der Sensor aus einem Reed-Kontakt bestehen
und dass in der Sonderposition (48) des ID-Gebers (40) das vom Permanentmagneten ausgehende magnetische Feld den Reed-Kontakt im ID-Geber (40) schließt.

9. Vorrichtung nach einem oder mehreren der Ansprüche 1 bis 8, **dadurch gekennzeichnet, dass** die im Normalfall zur codierten Kommunikation (15) dienenden elektronischen Bauteile (25, 45) im Fahrzeug (10) und im ID-Geber (40) zugleich als aktive und passive Teile der Not-Einrichtung fungieren
und dass zwischen diesen Bauteilen (45, 25) auch die zum Laden des Energiespeichers (26) dienende Energie übertragen wird, wenn sich der ID-Geber (40) in seiner Sonderposition (48) befindet.

10. Vorrichtung nach Anspruch 9, **dadurch gekennzeichnet, dass** die beiden Bauteile jeweils aus einer induktiven Antenne (25; 45) bestehen,
dass die Antenne (25) im Fahrzeug (10) normalerweise zum Senden der Codesignale (5) und die Antenne (45) im ID-Geber (40) zu deren Empfang dient,
aber im Notfall die Antenne (45) im ID-Geber (40) als Spender elektrischer Energie und die Antenne (25) im Fahrzeug (10) als Energieempfänger fungieren.

11. Vorrichtung nach einem oder mehreren der Ansprüche 1 bis 10, **dadurch gekennzeichnet, dass** der Energiespeicher (26) im Fahrzeug (10) einen Ladestromkreis (28) und einen Entladestromkreis (29) aufweist,
dass der im Notfall als Energieempfänger dienende Bauteil (25) vom Fahrzeug (10) im Ladestromkreis (28) und der Aktuator (14) im Entladestromkreis (29) angeordnet sind.

12. Vorrichtung nach einem oder mehreren der Ansprüche 1 bis 11, **dadurch gekennzeichnet, dass** im Fahrzeug (10) ein Schaltglied (36) angeordnet ist, welches dem Aktuator (14) vorgeschaltet ist
und dass das Schaltglied (36) bei ausreichendem Füllstand des Energiespeichers (26) geschlossen wird.

13. Vorrichtung nach Anspruch 11 oder 12, **dadurch gekennzeichnet, dass** im Fahrzeug (10) ein Authentifizierungsglied (52) angeordnet ist, das auch im Notfall mit dem in seiner Sonderposition (48) befindlichen ID-Geber (40) kommuniziert
und dass bei erfolgreicher Authentifizierung zwischen dem ID-Geber (40) und dem Fahrzeug (10) das Authentifizierungsglied (52) den Entladestromkreis (29) mit dem Aktuator (14) schließt.

14. Vorrichtung nach Anspruch 13, **dadurch gekennzeichnet, dass** das Authentifizierungsglied (52) im Bereich des Griffs (20) angeordnet ist.

15. Vorrichtung nach Anspruch 13 oder 14, **dadurch gekennzeichnet, dass** das Authentifizierungsglied ein Transponder (52) oder ein Security Controller ist.

16. Vorrichtung nach Anspruch 15, **dadurch gekennzeichnet, dass** der Transponder (52) als sogenannter TAG, nämlich als passiver Transponder (52) ausgebildet ist, der einen Resonanzkreis aufweist und die zu seinem Betrieb erforderliche Energie den Codesignalen entnimmt.

17. Vorrichtung nach Anspruch 16, **dadurch gekennzeichnet, dass** im Notfall der Transponder (52) eine Feldabschwächung des in Sonderposition (48) befindlichen und einer Sonderbetätigung (49) unterliegenden ID-Gebers (40) bewirkt
und dass diese definierte Feldschwächung als Signal an den ID-Geber (40) abgegeben wird.

18. Vorrichtung nach einem oder mehreren der Ansprüche 1 bis 17, **dadurch gekennzeichnet, dass** das zur Kommunikation (15) dienende elektronische Bauteil (25) vom Fahrzeug (10) in dem Griff (20) integriert ist, der zum manuellen Öffnen der Tür (11) dient.

19. Vorrichtung nach einem oder mehreren der Ansprüche 1 bis 18, **dadurch gekennzeichnet, dass** der im Notfall zur Aufnahme von elektrischer Energie dienende Energieempfänger (25) und/oder der Sensor oder der Reed-Kontakt im fahrzeugseitigen Griff (20) integriert sind, der zum manuellen Öffnen der Tür (11) dient.

20. Vorrichtung nach einem oder mehreren der Ansprüche 1 bis 19, **dadurch gekennzeichnet, dass** die Energieübertragung zwischen dem mit der Stromquelle (44) verbundenen Energiespender im ID-Geber (40) einerseits und dem zum Laden des Energiespeichers (26) im Fahrzeug (10) dienenden Energieempfänger andererseits durch elektrische Kontakte am ID-Geber und elektrische Gegenkontakte am Fahrzeug erfolgt.

21. Vorrichtung nach einem oder mehreren der Ansprüche 1 bis 20, **dadurch gekennzeichnet, dass** zwischen dem ID-Geber (40) und dem Fahrzeug (10) mehrere, unabhängig oder abhängig voneinander wirksame Kommunikationsmittel (25, 45; 47, 16) angeordnet sind, die auf monodirektionale oder bidirektionale Weise Codesignale (15, 46) senden und/oder empfangen.

22. Vorrichtung nach einem oder mehreren der Ansprüche 1 bis 21, **dadurch gekennzeichnet, dass** der ID-Geber (40) als elektronischer Schlüssel, in Form eines sogenannten RKE (Remote Keyless Entry), oder in Form eines sogenannten PE (Passive Entry), ausgebildet ist.

23. Vorrichtung nach einem der Ansprüche 1 bis 22, **dadurch gekennzeichnet, dass** der ID-Geber (40) mit mindestens einer Anzeige (37) versehen ist.

24. Vorrichtung nach Anspruch 23, **dadurch gekennzeichnet, dass** die Anzeige den aktuellen Betriebszustand seiner Stromquelle (44) angibt.

25. Vorrichtung nach Anspruch 24, **dadurch gekennzeichnet, dass** die den Betriebszustand angebende Anzeige (37) dann wirksam oder unwirksam wird, wenn die im ID-Geber (40) befindliche Stromquelle (44) eine bestimmte Ladegrenze unterschreitet.

26. Vorrichtung nach Anspruch 23, **dadurch gekennzeichnet, dass** die Anzeige (37) angibt, ob die Energieübertragung an dem Energiespeicher (26) im Fahrzeug (10) erfolgreich beendet ist und/oder wenn im Notfall durch Entladen des Energiespeichers (26) das Schloss (30) zwischen seiner Sicherungs- und Entsicherungsposition (30.1; 30.2) umgesteuert worden ist.

27. Vorrichtung nach einem oder mehreren der Ansprüche 1 bis 26, **dadurch gekennzeichnet, dass** zwischen dem Griff (20) und dem Schloss (30) eine mechanische Wirkverbindung (22) besteht
und dass bei Umsteuerung des Aktuators (14) diese Wirkverbindung (22) zwecks Sicherung (30.1) des Schlosses (30) unterbrochen und zwecks Entsicherung (30.2) des Schlosses (30) geschlossen wird.

28. Vorrichtung nach einem oder mehreren der Ansprüche 1 bis 27, **dadurch gekennzeichnet, dass** der Griff (20) an einem Träger (21) gelagert ist, mit dem er eine vormontierte Griff-Baugruppe (50) bildet,
dass der Energiespeicher (26) die als Energieempfänger fungierenden Bauteile (25) und/oder das Authentifizierungsglied (52) und/oder der Sensor oder der Reed-Kontakt in dieser Griff-Baugruppe (50) integriert sind
und dass die ganze Griff-Baugruppe (50) mittels des Trägers (21) in der Tür (11) befestigbar ist.

29. Vorrichtung nach einem oder mehreren der Ansprüche 1 bis 28, **dadurch gekennzeichnet, dass** der Aktuator (14) aus einem elektrisch antreibbaren Motor besteht.

30. Vorrichtung nach Anspruch 29, **dadurch gekennzeichnet, dass** der Motor ein Piezomotor ist, der nach dem piezoelektrischen Effekt arbeitet.
